# EUROPÄISCHE PATENTSCHRIFT

(11) **EP 0 260 563 B1**
(45) Veröffentlichungstag und Bekanntmachung des Hinweises auf die Patenterteilung: **23.11.1994**
(21) Anmeldenummer: 87113035.7
(22) Anmeldetag: 07.09.1987
(51) Int. Cl.: C09B 67/24, C09B 67/54, D06P 1/39, C09B 69/02

(54) **Farbstoffpräparationen**
Dye preparations
Préparations tinctoriales

(30) Priorität: 18.09.1986 DE 3631750
(43) Veröffentlichungstag der Anmeldung: 23.03.1988
(73) Patentinhaber: BAYER AG, 51368 Leverkusen (DE)
(72) Erfinder: Szeymies, Detlef, Dr., D-5067 Kürten-Busch (DE); Wolff, Joachim, Dr., D-5068 Odenthal-Glöbusch (DE); Wolf, Karlheinz, Dr., D-5090 Leverkusen 1 (DE); König, Joachim, Dr., D-5068 Odenthal (DE); Paulat, Volker, Dr., D-4019 Monheim (DE)

(56) Entgegenhaltungen:
- EP-A- 0 126 830
- DE-A- 2 144 421
- FR-A- 2 111 628
- FR-A- 2 240 940
- FR-A- 2 524 476
- GB-A- 2 177 425

## Beschreibung

Gegenstand der vorliegenden Erfindung sind homogene Präparationen anionischer Farbstoffe mit einer Viskosität von ≧ 500 mPas enthaltend
a) 50-100 Gew.-% eines Farbstoffs der Formel

   F-(SO₃^{⊖}K^{⊕})₁₋₄,

   worin
   - F =: Rest eines Chromophors
   - K^{⊕} =: Äquivalent eines Kations bestehend aus
   ≧ 96 Äquivalent % eines Kations einer orga
   nischen Stickstoff- oder Phosphorbase
   ≦ 4 Äquivalent % eines Alkali- oder Ammoniumkations
b) ≦ 0,5 Gew.-% anorganische Salze
   gegebenenfalls
c) ≦ 50 Gew.-% Wasser, sowie gegebenenfalls
d) ≦ 30 Gew.-% bei Raumtemperatur flüssiger organischer Stickstoff- oder Phosphorbasen und/oder
   gegebenenfalls
e) ≦ 20 Gew.-% Lösungsvermittler und/oder hydrotroper Verbindungen
sowie gegebenenfalls übliche Hilfsmittel bzw. Zusatzstoffe, beispielsweise nichtionische oder anionische Dispergiermittel oder Emulgatoren.

Der Gesamtgehalt an Alkalikationen in den Präparationen soll dabei ≦ 2 Gew.-% betragen.

Bevorzugt sind dabei Präparationen mit 70 - 95 Gew.-% Komponente a), ≦ 20 Gew.-%, insbesondere ≦ 10 Gew.-% Komponente c) und ≦ 5 Gew.-%, insbesondere 0 Gew.-% Komponente e) und Viskositäten von ≧ 2000 mPas, insbesondere ≧ 5000 mPas.

Die Präparationen sind im allgemeinen von öliger bzw. pastöser Konsistenz und vorzugsweise bei Raumtemperatur nicht frei fließend.

Vorzugsweise sind die Präparationen frei von Verdickungsmitteln wie sie beispielsweise für die Herstellung von Druckfarben üblich sind.

Die Präparationen lassen sich leicht mit Wasser verdünnen. Sie finden Verwendung für die Herstellung von Färbebädern und Druckpasten zum Färben bzw. Bedrucken natürlicher oder synthetischer Substrate.

Geeignete Farbstoffe sind beispielsweise solche aus der Reihe der metallfreien oder metallhaltigen Mono- oder Polyazofarbstoffe, metallfreien oder metallhaltigen Azoporphinfarbstoffe wie Kupfer-, Nickel- oder Kobaltphthalocyanine, der Anthrachinon-, Oxazin-, Dioxazin-, Triphenylmethan-, Nitro-, Azomethin-, metallfreien oder metallhaltigen Formazan- sowie Pyridonfarbstoffe.

Geeignete Komponenten d) sind beispielsweise aliphatische Amine, insbesondere gegebenenfalls substituierte C₁-C₈-Alkylamine insbesondere C₂-C₄-Alkanolamine und deren Alkoxylierungsprodukte, insbesondere Ethoxylierungs- und Propoxylierungsprodukte, wie sie beispielsweise in der DE-A 2 031 520 beschrieben wurden, weiterhin Arylamine und Aralkylamine, inbesondere gegebenenfalls substituierte Phenyl-, Benzyl- und Phenylalkylamine und deren Ethoxylierungs-und Propoxylierungsprodukte, weiterhin quartäre Alkylammoniumhydroxide wie sie beispielsweise in der DE-A 2 341 293 beschrieben werden, cyclische Amine wie Morpholin oder Piperidin, ferner Heteroaromaten wie gegebenenfalls substituiertes Pyridin und alkylierte Pyridiniumhydroxide, weiterhin quartäre Aklyl- oder Arylphosphoniumhydroxide.

Geeignete Komponenten e) sind beispielsweise niedere aliphatische Amide, cyclische Amide wie Pyrrolidon, Caprolactam, Sulfone, Sulfolane, ein- und mehrwertige Alkohole und deren Ether, aromatische Kohlenwasserstoffe, hydrophobe Verbindungen wie Harnstoff, Thioharnstoff und Alkylierungsprodukte, Dicyandiamid und dessen Derivate.

Geeignete übliche Zusatzstoffe sind beispielsweise übliche nichtionische Dispergiermittel oder Emulatoren insbesondere Polyvinylpyrrolidone, Polyglykole, Fettsäureester der Polyglykole, Umsetzungsprodukte von Fettsäuren mit Ethylenoxid oder Propylenoxid, Polyglykolether von Fettalkoholen z.B. Oleylalkohol mit 30-50 mol Ethylenoxid, Oxethylierungsprodukte von Phenolderivaten z.B. Nonylphenolen bzw. der Phenol-Styrol-Addukte, und/oder Mannich-Kondensate aus Alkylaminen, Formaldehyd und Phenolen.

Gegenstand der Erfindung ist weiterhin ein Verfahren zur Herstellung der Farbstoffpräparationen, welches dadurch gekennzeichnet ist, daß eine praktisch salzfreie (≦1% anorganische Salze bezogen auf Farbstoff) verdünnte wäßrige Lösung des Alkali-, Ammonium- oder Erdalkalisalzes des Farbstoffs mit einem unlöslichen Kationenaustauscher vorzugsweise in Perl- oder Granulatform, in Kontakt gebracht (saure Form oder mit den entsprechenden organischen Basen beladen), anschließend - falls die saure Form des Austauschers eingesetzt wurde - mit den entsprechenden Basen neutralisiert und im Vakuum oder über einen Membrantrennprozeß auf den gewünschten Wassergehalt gebracht wird.

Man kann auch den trockenen, praktisch salzfreien in Form der freien Säure vorliegenden Farbstoff direkt mit der organischen Stickstoff- oder Phosphorbase umsetzen.

Die praktisch salzfreie Ausgangslösung erhält man in üblicher Weise bzw. nach folgendem Verfahren:

Ein durch Aussalzen in üblicher Weise erhältlicher Farbstoffpreßkuchen (Alkali- oder Erdalkalisalz des Farbstoffs) wird über einen Membrantrennprozeß entsalzt (vgl. z.B. DE-A 2 948 292).

Geeignete Ionenaustauscher für Verfahren 1 sind synthetische organische Ionenaustauscher auf Kunstharz-Basis, die saure Gruppen tragen und die bevorzugt in Perlform hergestellt werden. Dazu gehören handelsübliche makroporöse oder gelförmige Perlpolymerisate auf der Basis von vernetztem Polystyrol, bei dem die Styrolkerne durch Sulfonsäuregruppen oder -CH₂SO₃H-Gruppen substituiert sind. Als Vernetzer für Styrol oder substituierte Styrole werden Polyvinylaromaten und hierbei bevorzugt Divinylbenzol eingesetzt. Ferner kommen in Betracht Perlpolymere auf Polystyrolbasis, deren Styrolkerne durch folgende Gruppen subsitituiert sein können: 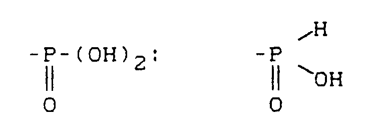
(-CH₂-N-(CH₂COOH)₂
-CH₂-N-CH₂COOH:

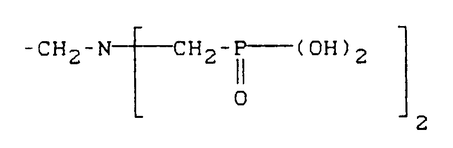

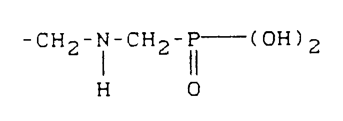

Weitere geeignete Kationenaustauscher sind solche mit -COOH-Gruppen. Dazu gehören Kationenaustauscher auf der Basis von vernetzter Acrylsäure oder vernetzter Methacrylsäure, vernetztem und anschließend verseiftem Maleinsäureanhydrid. Als Vernetzer werden Vinylaromaten (bevorzugt Divinylbenzol), Trivinylcyclohexan, Octadien-1,7 und Hexandien-1,5 sowie deren Mischungen) eingesetzt.

In Betracht kommen auch feste Ionenaustauscher mit sauren Gruppen, die durch Kondensationsreaktionen hergestellt wurden. Hierzu gehören Kationenaustauscher auf der Basis von Phenol oder Phenolderivaten, die mit Formaldehyd kondensiert werden. Stark saure Kationenaustauscher mit Sulfonsäuregruppen entstehen durch Kondensation von am Kern sulfonierten Aromaten (Phenolsulfonsäure oder Naphthalinsulfonsäure) mit Formaldehyd. Ferner können Harze mit -CH₂-SO₃H-Gruppen auf Phenolbasis durch gleichzeitige Reaktion von HCHO, Natriumsulfit und Phenol hergestellt werden.

Kondensationsharze mit Carboxylgruppen werden durch Reaktion von HCHO mit z.B. 1,3,5-Resorcylsäure oder durch Umsetzung HCHO mit Phenoxyessigsäure, Resorcin-O-essigsäure oder analogen Verbindungen hergestellt.

In Betracht kommen auch schwach saure Harze, die durch Kondensation von Phenol oder Resorcin mit Formaldehyd hergestellt wurden. Neben den synthetischen organischen Ionenaustauschern können auch anorganische Kationenaustauscher als feste Säuren eingesetzt werden. Dazu gehören insbesondere die große Klasse der Zeolith-Minerale oder die Klasse der Glaukonite (Grünsande). Zu den Zeolithen gehören u.a. Mordenit (Ca, K₂, Na₂) [Al Si₅O₁₂]₂ · 2 H₂O. Eingesetzt werden können natürliche anorganische Ionenaustauscher oder auch künstlich hergestellte anorganische Ionenaustauscher.

Kationenaustauscher der genannten Art sind in großer Zahl im Handel und in der Literatur beschrieben, vgl. z.B. Ullmann's "Encyclopädie der technischen Chemie", 4. Auflage. Band 13, Seiten 279-346.

Flüssige Farbstoffzubereitungen von anionischen Farbstoffen - Dispersionen und Lösungen - sind in der Literatur in großer Vielzahl beschrieben. Bevorzugt ist dabei die Formierung in Lösung, wobei mit Hilfe von Lösungsmitteln oder Lösevermittlern die Löslichkeit der Farbstoffe in Wasser verbessert wird.

Vergleiche GB 47 791, US 799.909, SZ 15.607-70,
DOS 2.529.658, DOS 2.335.512, GB 1.060.063,
DOS 2.649.551, GB 1.545.529, EP 167.952,
DOS 3.403.662, EP 114.031, US 4.448.583 etc.

Oft bringen jedoch solche Lösungen, sofern sie nicht übermäßig verdünnt sind, Schwierigkeiten mit sich, z.B. die Abscheidung von Feststoffen bei Lagerung in der Kälte. Bei Farbstoffgehalten bis zu 30 Gew.-%, die max. in der Praxis üblich sind, fallen zudem hohe Tranportkosten beim Versand sowie die hohen Lagerkosten beim Abnehmer an. Viele der Farbstofflösungen enthalten aus Stabilisierunggründen Lösemittel, die bei Anwendung dann in den Färbereien in Kläranlagen entsorgt, d.h. abgebaut werden müssen.

Zur Vermeidung von Auskristallisation und hohem Lösemittelanteil sind die Formierungen als Dispersionen entwickelt worden; vgl. US 3.770.371, 4.110.073, 4.072.463 etc.

Nachteilig wirkt sich bei dieser Formierung vor allen Dingen die aufwendigere Handhabung bei Anwendung aus. Insbesondere nach längeren Lagerzeiten (> 6 Monaten) setzen Dispersionen vielfach geringfügig bis mäßig ab und sind zwecks Homogenisierung stets aufzurühren. Zusätzlich besteht bei Temperaturschwankungen oft die Gefahr des Nachlösens des Farbstoffes in der Wärme und ein erneutes Ausfallen in der Kälte. Dies führt dann zu kittigen Inkrementen, die ein einfaches Entleeren der Gebinde verhindern.

Die erfindungsgemäßen Präparationen vereinigen in sich die Vorteile von echten Farbstofflösungen (Homogenität) mit den Vorteilen von Dispersionen (hohe Konzentration).

Aus FR-A-2 524 476 sind feste Farbstoffpräparationen von anionischen Farbstoffen bekannt, die neben mindestens einem anionischen Dispergiermittel, einem nichtionischen Emulgator sowie gegebenenfalls weiteren Zusätzen bezogen auf die fertige Präparation 0,1 bis 10 Gew.-% eines quaternären Ammoniumsalzes einer bestimmten Formel enthalten.

EP-A-0 126 830 beschreibt ein Verfahren zur Umwandlung schwerlöslicher Salze anionischer Farbstoffe und optischer Aufheller in leichter lösliche Salze mittels Donnan-Dialyse.

### Beispiel 1

1 mol p-Nitrotoluolsulfonsäure werden in 650 g Wasser angerührt und mit 0,01 mol 5-Aminobenzolsulfonsäure versetzt. Nach Zugabe von ca. 2,6 mol LiOH.H₂O wird für 4 h bei 60°C unter N₂-Atmosphäre kondensiert. Man gibt weitere 600 g H₂O zu und gibt die Lösung über eine Säule mit ca. 1,5 l stark saurem Kationenaustauscherharz auf Basis von vernetztem Polystyrol (Kapazität 2 mol/l). Mit ca. 1500 ml H₂O wird das Harz von Farbstoff frei gewaschen. Nach Zugabe von 3 mol N(C₂H₄-O-C₂H₄-OH)₄-OH wird im Vakuum auf ca. 1360 g eingeengt. Man erhält ein hochviskoses Farbstofföl enthaltend 7 % Wasser. Das Öl eignet sich nach Verdünnung und Zugabe der üblichen Hilfsmittel direkt zum Färben von Papier in gelben Tönen.

### Beispiel 2

Zur Kondensationslösung aus Beispiel 1 werden nach Kationenaustausch 2,7 mol der Verbindung N(C₂H₄-O-C₂H₄-OH)₃ gegeben und im Vakuum auf 1200 g eingeengt. Man erhält ein hochviskoses Öl enthaltend 10 % Wasser und 0,46 % Li.

### Beispiel 3

1 mol 4-[(4-Aminophenyl)azo]-benzolsulfonsäure werden in 1800 ml Wasser bei 85°C gelöst und nach Abkühlen mit 30 %iger NaNO₂-Lösung in Gegenwart von stark saurem Kationenaustauscherharz auf Basis von vernetztem Polystyrol mit einer Kapazität von 1,2 mol sauren Gruppen diazotiert. Kupplung erfolgt bei pH = 6 auf 1 mol Benzoyl-I-Säure in wäßriger Lösung unter Zugabe von 1 mol N(C₂H₄-O-C₂H₄-OH)₃. Zur Farbstofflösung werden zwecks Kationenaustausch ca. 0,8 l Kationenaustauscherharz (saure Form) gegeben und nach Klärung wird das Filtrat mit 2 mol N(C₂H₄-O-C₂H₄-OH)₃ auf pH = 5 gestellt. Die Lösung wird im Vakuum auf 2000 g eingeengt. Man erhält ein hochviskoses Öl, das ca. 75 % roten Farbstoff enthält.

### Beispiel 4

Eine Lösung bestehend aus 277 g Farbstoff der Formel (1) 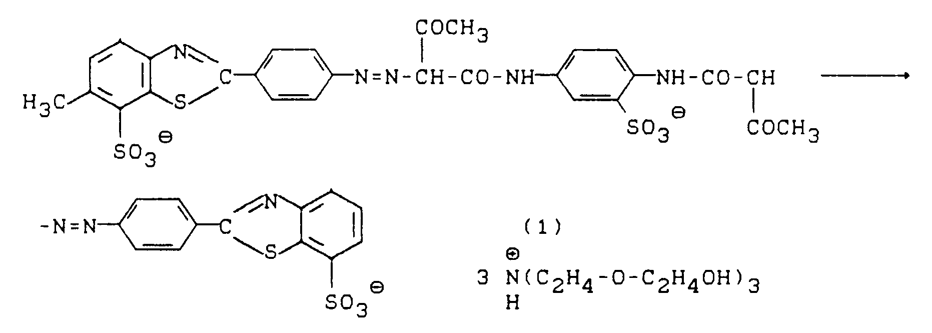
und 723 g Wasser (hergestellt analog Beispiel 5) wird nach Zugabe von 17 g N(C₂H₄-O-C₂H₄-OH)₃ im Vakuum bei 40°C auf einen Gehalt von 80 % Farbstoff eingeengt. Man erhält ein hochviskoses Öl, das neben dem Farbstoff ca. 16 % Wasser enthält.

### Beispiel 5

1 kg einer Lösung bestehend aus 158 g Reaktivfarbstoff der Formel 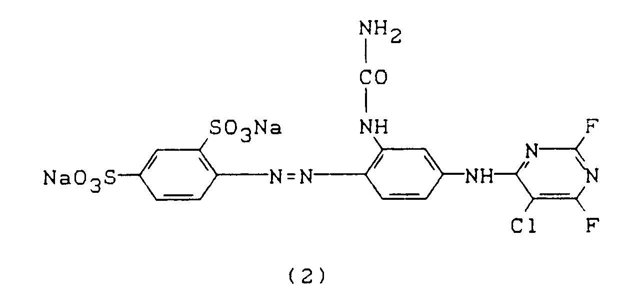
und 2432 g Wasser werden über eine Säule, gefüllt mit 350 ml eines stark sauren Kationenaustauscherharzes mit einer Kapazität von ca. 2 Mol saure Gruppen pro Liter, gegeben und mit 1500 ml Wasser nachgewaschen. Die Farbstoff-Lösung wird kontinuierlich mit 52 g N(C₂H₄-O-C₂H₄-OH)₃ auf pH 6 gestellt. Nach Einengen im Vakuum bei 40°C erhält man 300 g eines hochviskosen Öls enthaltend ca. 63 % Reaktivfarbstoff, das nach Verdünnung und Zugabe der für die Reaktivfärberei üblichen Hilfsmittel geeignet ist zum Färben von Cellulose oder Baumwolle in goldgelbem Ton.

### Beispiel 6

1 Mol des sauren Anthrachinonfarbstoffs der Formel 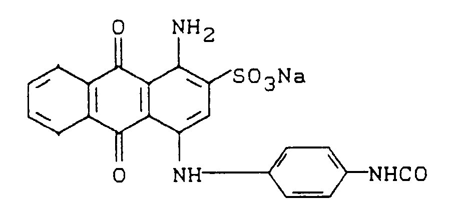
werden in 5700 ml Wassser durch Zusatz von 500 ml eines stark sauren Kationenaustauscherharzes mit einer Kapazität von ca. 2 Mol saurer Gruppen pro Liter in die saure Form überführt. Durch Zugabe von 120 g Methyldiethanolamin und 340 g N,Nʹ-Dimethylharnstoff wird gelöst, vom Austauscherharz abgetrennt. Die so erhaltene Lösung wird über eine Säule mit 500 ml Kationenaustauscherharz in der Methyldiethanolammonium-Form (Kapazität ca. 2 Mol pro Liter) eluiert und schließlich im Vakuum zu einem Öl enthaltend 20 Gew.-% Wasser und 50 % Farbstoff eingeengt.

## Patentansprüche

1. Homogene Präparationen anionischer Farbstoffe mit einer Viskosität von ≧ 500 mPas enthaltend
a) 50-100 Gew.-% eines Farbstoffs der Formel
F-(SO₃^{⊖}K^{⊕})₁₋₄,
worin
F = Rest eines Chromophors
K^{⊕} = Äquivalent eines Kations bestehend aus
≧ 96 Äquivalent % eines Kations einer organischen Stickstoff- oder Phosphorbase
≦ 4 Äquivalent % eines Alkali- oder Ammoniumkations
b) ≦ 0,5 Gew.-% anorganische Salze gegebenenfalls
c) ≦ 50 Gew.-% Wasser, sowie gegebenenfalls
d) ≦ 30 Gew.-% bei Raumtemperatur flüssiger organischer Stickstoff- oder Phosphorbasen und/oder
gegebenenfalls
e) ≦ 20 Gew.-% Lösungsvermittler und/oder hydrotroper Verbindungen
sowie gegebenenfalls übliche Hilfsmittel bzw. Zusatzstoffe.

2. Präparationen gemäß Anspruch 1 enthaltend 70 - 95 Gew.-% Komponente a).

3. Präparationen gemäß Anspruch 1 und 2 enthaltend ≦20 Gew.-% Komponete c).

4. Präparationen gemäß Ansprüchen 1-3 enthaltend ≦5 Gew.-% Komponente e).

5. Präparationen gemäß Ansprüchen 1-4 Viskositäten von ≧ 2000mPas.

6. Verwendung der Präparationen gemäß Ansprüchen 1 - 5 zur Herstellung von Färbebädern und Druckpasten.

7. Verfahren zur Herstellung der Farbstoffpräparationen der Ansprüche 1 bis 5, dadurch gekennzeichnet, daß eine praktisch salzfreie (≦1 % anorganische Salze bezogen auf Farbstoff) verdünnte wäßrige Lösung des Alkali-, Ammonium- oder Erdalkalisalzes des Farbstoffs mit einem unlöslichen Kationenaustauscherharz in Kontakt gebracht (saure Form oder mit den entsprechenden organischen Basen beladen), anschließend - falls die saure Form des Austauschers eingesetzt wurde mit den entsprechenden Basen neutralisiert - und im Vakuum oder über einem Menbrantrennprozeß auf den gewünschten Wassergehalt gebracht wird.

## Claims

1. Homogeneous preparations of anionic dyes having a viscosity of ≧ 500 mPas, containing
a) 50-100% by weight of a dye of the formula
F-(SO₃^{⊖}K^{⊕})₁₋₄,
wherein
F = radical of a chromophore
K^{⊕} = equivalent of a cation consisting of
≧ 96 equivalent % of a cation of an organic nitrogen or phosphorus base
≦ 4 equivalent % of an alkali metal or ammonium cation
b) ≦ 0.5% by weight of inorganic salts
optionally
c) ≦ 50% by weight of water, and also optionally
d) ≦ 30% by weight of organic nitrogen or phosphorus bases liquid at room temperature, and/or
optionally
e) ≦ 20% by weight of solubilizers and/or hydrotropic compounds
and also optionally customary auxiliaries/additives.

2. Preparations according to Claim 1 containing 70 - 95% by weight of component a).

3. Preparations according to Claims 1 and 2 containing ≦ 20% by weight of component c).

4. Preparations according to Claims 1-3 containing ≦ 5% by weight of component e).

5. Preparations according to Claims 1-4 having viscosities of ≧ 2000 mPas.

6. Use of the preparations according to Claims 1-5 for preparing dyebaths and printing pastes.

7. Process for preparing the dye preparations of Claims 1 to 5, characterized in that a virtually salt-free (≦ 1% of inorganic salts based on dye) dilute aqueous solution of the alkali metal, ammonium or alkaline earth metal salt of the dye is brought into contact with an insoluble cation exchanger resin (acidic form or loaded with the corresponding organic bases), subsequently - if the acidic form of the exchanger was used - neutralized with the corresponding bases and brought to the desired water content in vacuo or via a membrane separation process.

## Revendications

1. Compositions homogènes de colorants anioniques ayant une viscosité supérieure ou égale à 500 mPas, qui contiennent
a) 50 à 100 % en poids d'un colorant de formule
F-(SO₃⁻K^{⊕})₁₋₄
dans laquelle
F = radical d'un chromophore,
K^{⊕} = équivalent d'un cation consistant en
≧ 96 équivalents % d'un cation d'une base organique azotée ou phosphorée,
≦ 4 équivalents % d'un cation alcalin ou d'ammonium
b) ≦ 0,5 % en poids de sels minéraux, le cas échéant
c) ≦ 50 % en poids d'eau et le cas échéant
d) ≦ 30 % en poids de bases organiques azotées ou phosphorées liquides à température ambiante
et/ou
le cas échéant
e) ≦ 20 % en poids d'agents solubilisants et/ou composés hydrotropes et le cas échéant des produits auxiliaires et additifs usuels.

2. Compositions selon la revendication 1, contenant 70 à 95 % en poids du composant a).

3. Compositions selon les revendications 1 et 2, contenant ≦ 20 % en poids du composant c).

4. Compositions selon les revendications 1 à 3, contenant ≦ 5 % en poids du composant e).

5. Compositions selon les revendications 1 à 4, ayant des viscosités supérieures ou égales à 2 000 mPas.

6. Utilisation des compositions selon les revendications 1 à 5 pour la préparation de bains de teinture et pâtes d'impression.

7. Procédé de préparation des compositions de colorants des revendicaitons 1 à 5, caractérisé en ce que l'on met en contact une solution aqueuse diluée d'un sel alcalin, d'ammonium ou alcalino-terreux du colorant, pratiquement débarrassée de sels (≦ 1 % de sels minéraux par rapport aux colorants) avec une résine échangeuse de cations insoluble (sous la forme acide chargée par la base organique correspondante) puis - lorsqu'on a utilisé l'échangeur sous la forme acide, on neutralise par la base correspondante - on porte à la teneur en eau voulue sous vide ou dans une opération de séparation sur membrane.
